# EUROPÄISCHE PATENTSCHRIFT

(11) **EP 3 184 915 B1**
(45) Veröffentlichungstag und Bekanntmachung des Hinweises auf die Patenterteilung: **09.01.2019**
(21) Anmeldenummer: 16198674.0
(22) Anmeldetag: 14.11.2016
(51) Int. Cl.: F24D 19/00, F16K 11/072, F16K 11/085, F24D 19/10

(54) **VORRICHTUNG UMFASSEND EINEN VENTILKÖRPER**
DEVICE COMPRISING A VALVE BODY
DISPOSITIF COMPRENANT UN CORPS DE SOUPAPE

(30) Priorität: 23.12.2015 AT 511022015
(43) Veröffentlichungstag der Anmeldung: 28.06.2017
(73) Patentinhaber: Rettig Austria GmbH, 8661 St. Barbara im Mürztal (AT)
(72) Erfinder: DOPPELREITER, Peter, 8665 Langenwang (AT); KOGLER, Joachim, 8053 Graz (AT); STRUYF, Johan, 3090 Overijse (BE)
(74) Vertreter: Wildhack & Jellinek

(56) Entgegenhaltungen:
- EP-A2- 1 669 692
- EP-A2- 2 775 222
- WO-A1-2014/071896
- WO-A1-2014/124613
- DE-A1- 10 002 249

## Beschreibung

Die Erfindung betrifft eine Vorrichtung gemäß dem Oberbegriff des Patentanspruchs 1. Solch eine Vorrichtung ist aus WO 2014/071896 A1 bekannt. Ferner betrifft die Erfindung Heizkörper mit zumindest zwei Heizelementen, die über eine erfindungsgemäße Vorrichtung mit Heizfluid versorgt werden können.
Bei der asymmetrischen Beaufschlagung von mehrlagigen Heizkörpern wird beim Einströmen des Heizfluids in den Heizkörper das Heizfluid zu einem großen Teil zuerst nur in das raumseitige Heizelement gelenkt und dadurch ist es möglich, die Oberflächentemperatur des raumseitigen Heizelements gegenüber dem wandseitigen Heizelement deutlich zu erhöhen.
Bei einer symmetrischen Durchströmung wird das Heizfluid beim Einströmen in den Heizkörper zu annähernd gleichen Teilen auf beide oder zwei Heizelemente verteilt.
Ziel der Erfindung ist es, eine Vorrichtung mit einem Ventil, vorzugsweise Regelventil, zu erstellen, mit der die Durchströmungsart von Heizkörpern, insbesondere eines zumindest zwei Heizelemente umfassenden Heizkörpers, wählbar eingestellt und auch nach Montage des Heizkörpers verändert werden kann, und gleichzeitig eine freie, unbefugte Verdrehbarkeit des Ventilkörpers verhindert werden kann, um ihn in einer bestimmten Winkellage zu fixieren. Dieses Ziel wird bei einer Vorrichtung der eingangs genannten Art erfindungsgemäß mit den im Kennzeichen des Patentanspruchs 1 angeführten Merkmalen erreicht. Erfindungsgemäß ist somit vorgesehen, dass die Vorrichtung eine Druckmutter umfasst. Dadurch ist eine Verstellung des Ventilkörpers in unterschiedliche Winkellagen einfach und sicher möglich, da der Ventilkörper mit der in das Ventilgehäuse auf- oder einschraubbaren Druckmutter in den unterschiedlichen Winkellagen am Ventilgehäuse festgelegt ist.

Die erfindungsgemäße Vorrichtung ermöglicht mit geringem konstruktiven Aufwand eine Abänderung der Durchströmung von zwei Heizelementen, vorzugsweise Platten, eines Heizkörpers. Je nach Einsatz des Ventilkörpers in das Ventilgehäuse ist es möglich, die beiden Heizelemente bzw. Heizplatten eines Heizkörpers asymmetrisch oder symmetrisch zu durchströmen. Es ist möglich, die Platte bzw. das Heizelement auszuwählen, die bzw. das bevorzugt durchströmt werden soll.

Im Hinblick auf eine einfache Herstellung und Montage ist es vorteilhaft, wenn die beiden Winkellagen zueinander bezüglich der Längsachse der Ventilaufnahme, vorzugsweise um 90°, versetzt sind bzw. in jeweils, vorzugsweise um 90°, zueinander versetzten Umfangsbereichen der Ventilaufnahme liegen, wobei der Fluidauslass in der einen Winkellage einem der Fluidanschlüsse des Ventilgehäuses zugewandt ist und Heizfluid bevorzugt zu diesem oder in diesen ausströmt und in der anderen Winkellage der Fluidauslass Heizfluid zu beiden Fluidanschlüssen abgibt. Damit ist ein symmetrisches oder asymmetrisches Anströmen von zwei an die Vorrichtung angeschlossenen Heizelementen möglich. Durch Wahl der Winkellage kann die Strömungsmenge zu den Fluidanschlüssen des Ventilgehäuses vorgegeben werden.
Baulich einfach ist die erfindungsgemäße Vorrichtung aufgebaut, wenn zwischen dem Ventilkörper und der Gehäuseinnenwand ein vom Ventilkörper zu den beiden Fluidanschlüssen des Ventilgehäuses führender bzw. die beiden Fluidanschlüsse fluidleitend verbindender Strömungsdurchgang ausgespart ist und der Fluidauslass in der einen Winkellage zu einem Fluidanschluss und in der anderen Winkellage, vorzugsweise mittig, in diesen Strömungsdurchgang ausströmt. Es ist von Vorteil, wenn die Fluidanschlüsse des Ventilgehäuses senkrecht zur Oberfläche des Ventilkörpers stehen. Zur Abdichtung der Vorrichtung kann vorgesehen sein, dass am Ventilkörper - in axialer Richtung gesehen - beidseitig des Fluidauslasses umlaufende Dichtflächen ausgebildet oder umlaufende Dichtungen angeordnet sind, die mit an der Gehäuseinnenwand ausgebildeten, umlaufenden Dichtflächen oder an der Gehäuseinnenwand angeordneten, umlaufenden Dichtungen zusammenwirken.

Um eine geregelte Fluidströmung für den symmetrischen und den asymmetrischen Betrieb zu erreichen, kann vorgesehen sein, dass am Ventilkörper in einem vom Fluidauslass beabstandeten, vorzugsweise diesem diametral gegenüberliegenden, Umfangsbereich ein Wulst oder Aufbau bzw. Aufsatz am Ventilkörper ausgebildet oder auf den Ventilkörper in diesem Umfangsbereich ein einen Wulst oder Aufbau bzw. Aufsatz ausbildender Körper aufgesetzt ist, der den Zwischenraum zwischen der Gehäuseinnenwand und der Oberfläche des Ventilkörpers einengt oder bis auf eine vorgegebene Leckage abdichtet, oder dass die Gehäuseinnenwand im Bereich zwischen den Fluidanschlüssen und die Umfangsfläche des Ventilkörpers aneinander angepasst sind und eine Heizfluidströmung zwischen sich verhindern oder zwischen sich einen Strömungsdurchgang mit vorgegebenem Querschnitt ausbilden, oder dass die Oberflächenform des Wulstes oder des Aufbaus bzw. Aufsatzes an die, gegebenenfalls rotationssymmetrisch ausgebildete, Innenwandfläche des Ventilgehäuses im Bereich um die Fluidanschlüsse angepasst ist und ein Einströmen von Heizfluid bei entsprechend gewählter Winkellage in den jeweiligen Fluidanschluss verhindert oder in definierter Form ermöglicht, wozu in zumindest einem Randbereich des Aufsatzes bzw. Wulstes bzw. Aufbaus ein Strömungsdurchgang oder ein Kanal ausgebildet ist.

Eine definierte Strömungsaufteilung ergibt sich, wenn der Strömungsdurchgang im Aufbau bzw. Wulst bzw. Aufsatz in einem Umfangsbereich, der zum Fluidauslass um 90° versetzt liegt, ausgebildet ist und eine Fluidströmung vom Fluidauslass zu dem jeweils nicht direkt angeströmten Fluidanschluss ermöglicht.

Ein strömungsgünstiger Aufbau ergibt sich, wenn die Fluidanschlüsse des Ventilgehäuses bezüglich des Ventilkörpers sowie dessen Längsachse sowie der Längsachse der Ventilaufnahme einander diametral gegenüberliegen und/oder der Fluidauslass in einer seiner Winkellagen, gegebenenfalls zentral, vor der Fluideinströmöffnung eines Fluidanschlusses liegt und/oder wenn der Fluideinlass des Ventilkörpers auf der oder im Bereich der im Ventilgehäuse liegenden Stirnfläche des Ventilkörpers liegt, und/oder wenn die Ausströmrichtung des Fluidauslasses senkrecht zur Längsachse des Ventilkörpers gerichtet ist und/oder der Fluidauslass des Ventilkörpers auf der Umfangsfläche des insbesondere zylindrische Oberfläche besitzenden Ventilkörpers liegt bzw. austritt.

Einfach herstellbar ist die Vorrichtung, wenn der Aufsatz und/oder der Wulst als ein auf einem auf den Ventilkörper aufsteck- oder aufsetzbarer Bauteil ausgebildet sind.

Die Erfindung betrifft ferner einen Heizkörper mit zumindest zwei mit Heizfluid gefüllten bzw. befüllbaren, gegebenenfalls plattenförmigen und/oder parallel zueinander angeordneten, Heizelementen, deren jeweiliger Fluideinlass mit einem Fluidanschluss des Ventilgehäuses einer erfindungsgemäßen Vorrichtung fluidleitend verbunden ist. Ferner betrifft die Erfindung einen Heizkörper, von dem zwei Heizelemente oder Heizplatten mit einer erfindungsgemäßen Vorrichtung fluidleitend verbunden sind.

Der eingesetzte Ventilkörper regelt zusätzlich auch den mengenmäßigen Durchfluss von Heizfluid durch die Vorrichtung und kann damit auch die Funktion eines Thermostatventils oder eines händisch regelbaren Ventils erfüllen. Der Ventilkörper kann mit seinem Fluidauslass um die Längsachse des Ventilgehäuses kontinuierlich oder in festgelegte Stellungen um seine Längsachse verdreht werden bzw. in wählbare Winkellagen in das Ventilgehäuse bzw. die Ventilaufnahme eingesetzt werden, um so die Ausströmung der beiden Fluidauslässe geregelt und variabel vornehmen zu können. Die Schalt- bzw. Durchsatzmengenregelfunktion des Ventilkörpers wird dadurch nicht beeinflusst.

Ein nachträglicher Umbau eines Heizkörpers durch Abänderung der Winkellage des Ventilkörpers vor Ort ist möglich. Es wird eine Umstellung von einer parallelen bzw. symmetrischen Durchströmung von zwei Heizelementen in eine asymmetrische Durchströmung ohne großen Aufwand, lediglich durch Lockerung einer Druckschraube und Wahl einer anderen Winkellage des Ventilkörpers, ermöglicht.

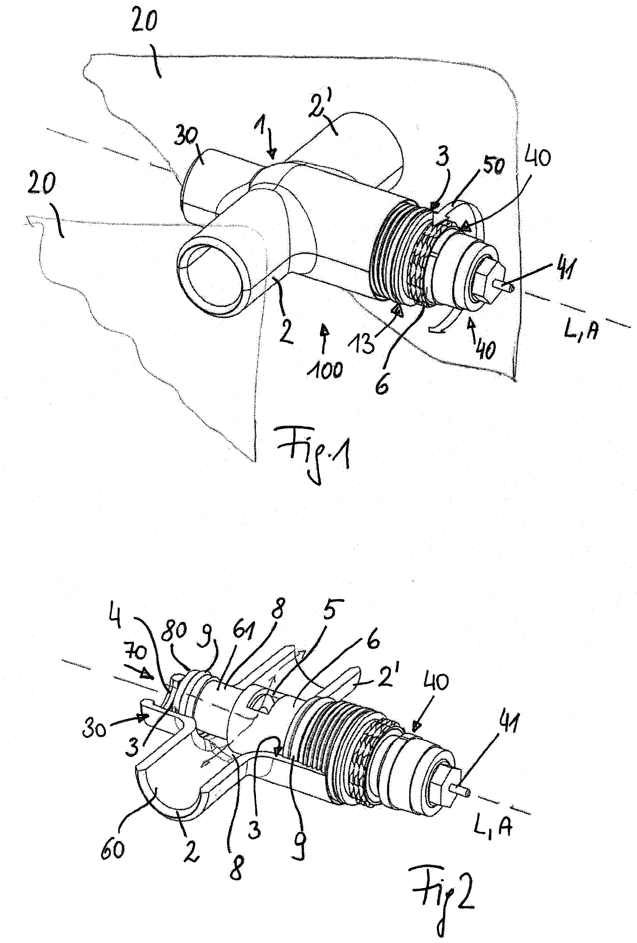

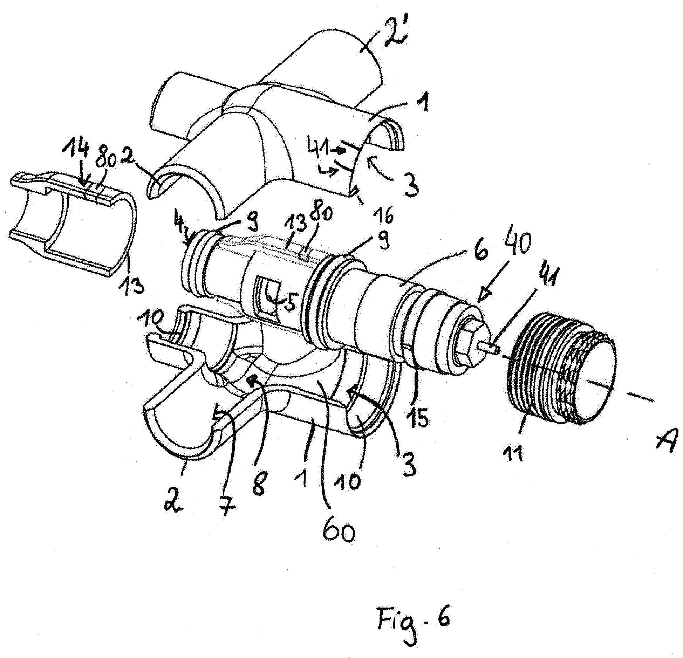

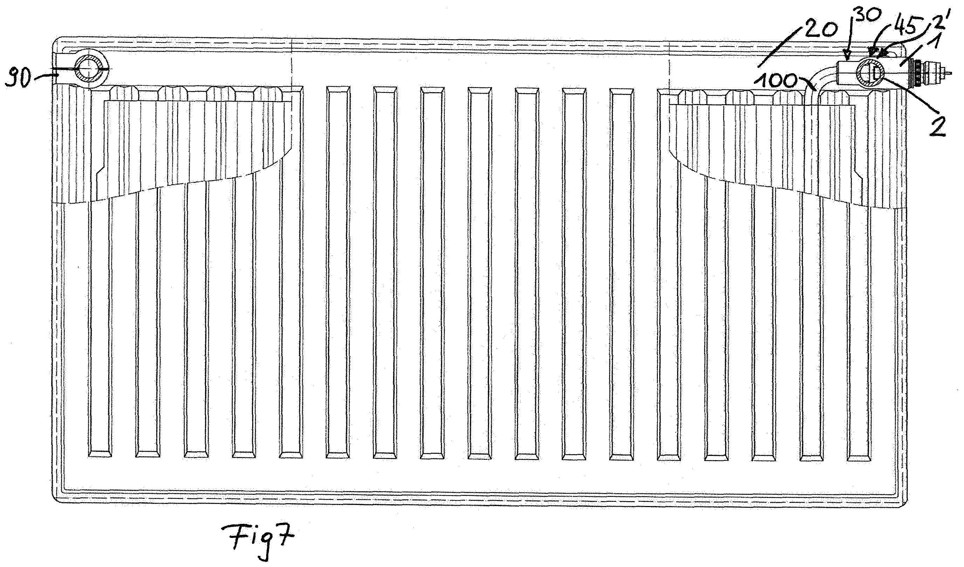

Fig. 1 bis 5 zeigen Ansichten von offenen Vorrichtungen. Fig. 6 zeigt eine schematische Explosionszeichnung. Fig. 7 zeigt ein Heizelement mit einer erfindungsgemäßen Vorrichtung.

Fig. 1 zeigt eine Ansicht einer erfindungsgemäßen Vorrichtung 100 zur Versorgung von zwei an diese Vorrichtung 100 fluidleitend angeschlossenen, schematisch dargestellten Heizelementen 20 mit Heizfluid. Die Vorrichtung umfasst ein Ventilgehäuse 1 mit einem vorderen Fluidanschluss 2 und einem hinteren Fluidanschluss 2', an die in an sich bekannter Weise die Heizelemente 20 angeschlossen werden können. Die Heizelemente 20 können Plattenheizkörper, Röhrenheizkörper oder Heizkörper beliebiger anderer Gestalt sein. Die Vorrichtung 100 besitzt einen Anschluss 30, durch den Heizfluid der Vorrichtung 100 zugeleitet wird, das von dieser den beiden angeschlossenen Heizelementen 20 zugeführt werden kann. Die Herkunft des Heizfluids ist beliebig; die Ableitung des Heizfluids aus den beiden Heizelementen 20 ist nicht Gegenstand der Erfindung, da dies dem Fachmann bekannt ist bzw. dafür eine Reihe von Lösungen zur Verfügung steht, z.B. die Ausbildung eines Heizfluidauslasses 90.

In die Vorrichtung 100 bzw. in eine Ventilaufnahme 3 des Ventilgehäuses 1 ist ein Ventil 40 eingesetzt. Dieses Ventil 40 regelt den Durchfluss des Heizfluids vom Fluideinlass 4 zum Fluidauslass 5 durch einen Ventilkörper 6 des Ventils 40 in herkömmlicher Weise. Dazu kann das Ventil 40 einen Betätigungsstift 41 aufweisen, der von einem auf das Ventilgehäuse 1 aufschraubbaren Ventilkopf, z.B. einem Thermostatkopf, verstellt werden kann und den Gesamtdurchfluss des den Ventilkörper 6 durchströmenden Heizfluids mengenmäßig regelt.
Wie mit dem Pfeil 50 angedeutet, kann der Ventilkörper 6 in verschiedenen Winkellagen, die entweder kontinuierlich oder diskontinuierlich verändert bzw. ausgewählt werden können, um die Längsachse L der Ventilaufnahme 3 bzw. um die Längsachse A des Ventilkörpers 6 verdreht in die Ventilaufnahme 3 eingesetzt werden. Mit einer in Fig. 6 dargestellten Druckmutter 11 wird der Ventilkörper 6 in der gewünschten Winkellage im Ventilgehäuse 1 festgelegt.
Wie insbesondere aus Fig. 2 ersichtlich ist, besteht das Ventilgehäuse 1 aus zwei, einer oberen und einer unteren, Halbschalen, die zum Ventilgehäuse 1 zusammengesetzt werden. Der Ventilkörper 6 ist mit entsprechenden Dichtungen 9, vorzugsweise mit zusammenwirkenden Dichtflächen bzw. Dichtungen, an der Ventilaufnahme 3 bzw. der Gehäuseinnenwand 60 und an der Oberfläche 61 des Ventilkörpers 6 dicht in das Ventilgehäuse 1 eingepasst, sodass das dem Ventilgehäuse 1 zugeführte Heizfluid lediglich durch die Fluidanschlüsse 2, 2' austreten kann. Der Ventilkörper 6 ist rotationssymmetrisch bzw. zylindrisch ausgebildet, ebenso wie die Dichtflächen und die Innenwandflächen der Ventilaufnahme 3, um einen exakten Einbau des Ventilkörpers 6 einfach zu ermöglichen und auch gleichzeitig den Ventilkörper 6 in verschiedene(n) Winkellagen einsetzen bzw. verdrehen zu können.
Wie mit dem Pfeil 70 angedeutet, erfolgt die Zufuhr des Heizfluids bis zu der im Ventilgehäuse 1 liegenden End- bzw. Stirnfläche 80 des Ventilkörpers 6 in der der Fluideinlass 40 liegt. Durch das Innere des Ventilkörpers 6 wird das Heizfluid zu einem im Ventilkörper 6 ausgebildeten Ausströmungsfenster bzw. Fluidauslass 5 geführt und tritt durch diesen Fluidauslass 5 in das Innere des Ventilgehäuses 1 aus. Von dem Fluidauslass 5 wird das Heizfluid durch einen im Inneren des Ventilgehäuses 1 liegenden Strömungsraum 8 zu den bzw. in die Fluidanschlüsse(n) 2, 2' und von dort in die Heizelemente 20 geführt. Dieser Strömungsraum 8 kann auf einer Seite oder beiden Seiten, das heißt oberhalb und/oder unterhalb, des Ventilkörpers 6 ausgebildet sein. Gemäß Fig. 2 ist der Ventilkörper 6 in einer Winkellage in das Ventilgehäuse 1 eingesetzt, in der der Fluidauslass 5 nach oben gerichtet ist. Über einen unteren und einen oberen Strömungsraum 8, die jeweils zwischen der Oberfläche 61 des Ventilkörpers 6 und der Gehäuseinnenwand 60 ausgebildet sind, wie in Fig. 2 dargestellt, und die unterhalb und/oder oberhalb des Ventilkörpers 6 verlaufen, kann Heizfluid vom Fluidauslass 5 in gleichen Mengen in die beiden Fluidanschlüsse 2, 2' und zu den Heizelementen 20 strömen und diese symmetrisch anspeisen. Diese Anspeisung würde auch möglich sein, wenn der Fluidauslass 5 nach unten gerichtet ist.

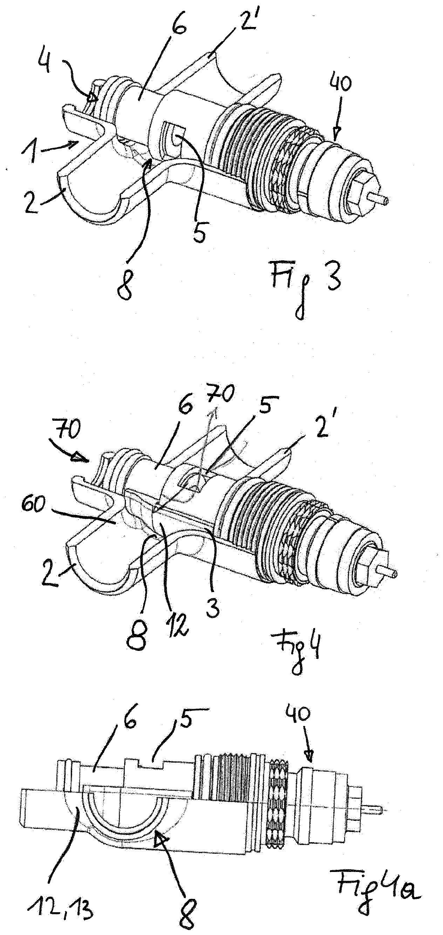

In Fig. 3 ist der Ventilkörper 6 in einer gegenüber der in Fig. 2 dargestellten Winkellage um 90° um die Achse L bzw. A verdrehten Winkellage in das Ventilgehäuse 1 eingesetzt, in der der Fluidauslass 5 auf einen Fluidanschluss 2 hin, und zwar dem in der Zeichnung vorne liegenden Fluidanschluss 2, gerichtet ist, sodass das Heizfluid hauptsächlich in diesen Fluidanschluss 2 eingeströmt wird. Ein geringerer Teil des dem Ventilkörper 6 über den Fluideinlass 4 zugeführten Heizfluids wird dem anderen bzw. hinteren Fluidanschluss 2' zugeführt. Auf diese Weise wird das in Fig. 1 vorne liegende Heizelement 20 zu einem überwiegenden Teil mit Heizfluid versorgt, sodass sich eine asymmetrische Durchströmung der beiden Heizelemente 20 ergibt. Das Heizfluid wird über einen eigenen Fluidauslass 90 des Heizelements 20 aus diesem abgeleitet.

Wenn es gewünscht ist, kann der Ventilkörper 6 auch derart in das Ventilgehäuse 1 eingesetzt werden, dass der Fluidauslass 5 in Richtung auf den in der Zeichnung hinten liegenden Fluidanschluss 2' gerichtet ist und dieser zu einem überwiegenden Teil mit Heizfluid durchströmt wird. Durch Wahl der Winkellage des Fluidauslasses 5 zwischen den beiden in den Fig. 2 und 3 dargestellten Stellungen kann das Ausmaß der Einströmung von Heizfluid in den nach vorne führenden Fluidanschluss 2 und in den nach hinten führenden Fluidanschluss 2' abgeändert werden. Wie den Fig. 2 und 3 zu entnehmen ist, stehen die beiden in diesen Figuren dargestellten Winkellagen zueinander senkrecht.

Fig. 4 zeigt eine Darstellung der erfindungsgemäßen Vorrichtung, vergleichbar mit der Darstellung der Fig. 2. Es ist jedoch auf den Ventilkörper 6 ein Aufsatz bzw. ein Wulst 13 aufgesetzt oder mit dem Ventilkörper 6 einstückig ausgebildet. Dieser Aufsatz bzw. Wulst 13 besitzt eine vorteilhafterweise zylindrische Außenfläche und ist dichtend oder mit vorgegebener Leckage in das Ventilgehäuse 1 eingesetzt. Der Aufsatz bzw. Wulst 13 umfasst den Ventilkörper 6 über einen vorgegebenen Umfangsbereich, insbesondere zumindest einen Winkelbereich des Ventilkörpers 6, der dem Winkelbereich der Einlassöffnung eines Fluidanschlusses 2, 2' entspricht, um diesen abdichten oder mit einer vorgegebenen Leckage abschließen zu können. Dieser Aufsatz bzw. Wulst 13 dient dazu, in einem der Strömungsräume 8, die zwischen dem Ventilkörper 6 und der Gehäuseinnenwand 60 ausgebildet sind, eindeutige Strömungsverhältnisse zu schaffen oder diesen, allenfalls mit vorgegebener Leckage, abschließen zu können.

Der Aufsatz 13 kann auch den Ventilkörper 6 in einem Umfangsbereich von etwa 180° bzw. etwas mehr, beispielsweise bis 200°, umgeben. Dieser Aufsatz bzw. Wulst 13 würde somit ein Einströmen von Fluid, das aus dem Fluidauslass 5 austritt, in den hinten liegenden Fluidanschluss 2' verhindern. Sofern eine vorgegebene Leckage im bzw. durch den Aufsatz bzw. Wulst 13 vorgesehen ist, kann hier in einer definierten Weise Heizfluid auch in den hinteren Fluidanschluss 2' strömen, sodass ein an den hinteren Fluidanschluss 2' angeschlossenes Heizelement 20 mit einer geringeren Fluidmenge versorgt wird, als ein an den vorderen Fluidanschluss 2 angeschlossenes Heizelement 20.

Es ist aber auch möglich, in dem Aufsatz bzw. Wulst 13 Kanäle 80 bzw. Durchströmöffnungen 80 mit definiertem Querschnitt auszubilden, um so das Verhältnis der Durchströmung vom vorderen Heizelement zum hinteren Heizelement 20 in definierter Weise vorgeben zu können. Derartige Aufsätze bzw. Wülste 13 sind deshalb für die Praxis von Bedeutung, da ein herkömmlicher Ventilkörper 6 eingesetzt werden kann, der in das Ventilgehäuse 1 mit einem entsprechend geformten Aufsatz 13 eingesetzt werden kann, wobei der Ventilkörper 6 in die vorgegebenen Winkellagen verdreht in das Ventilgehäuse 1 eingesetzt werden kann.

Die Gehäuseinnenwand 60, insbesondere im Bereich um die Fluidanschlüsse 2, 2', und die Außenkontur des Aufsatzes bzw. Wulstes 13 sind aneinander angepasst, sodass der Aufsatz bzw. Wulst 13 im Gehäuseinneren verdrehbar bzw. in unterschiedlichen Winkellagen dicht oder mit vorgegebener Leckage in das Ventilgehäuse 1 einsetzbar ist.

Wie aus Fig. 4 ersichtlich ist, ist eine unerwünschte Strömung von Heizfluid auf der dem Ausströmfenster bzw. Fluidauslass 5 gegenüberliegenden, unteren Seite des Ventilkörpers 6 von dem vorderen Fluidanschluss 2 zum hinteren Fluidanschluss 2' hin nicht möglich, da der Aufsatz bzw. Wulst 13 dort den Strömungsraum 8 abdichtet; die Anströmung der beiden Fluidanschlüssen 2, 2' erfolgt vom Fluidauslass 5, der in den Mittenbereich des Strömungsraumes 8 zwischen den Fluidanschlüssen 2, 2' einspeist. Die Fluideinspeisung in die Heizelemente 20 erfolgt symmetrisch.

Fig. 4a zeigt eine Seitenansicht der in Fig. 4 dargestellten Vorrichtung.

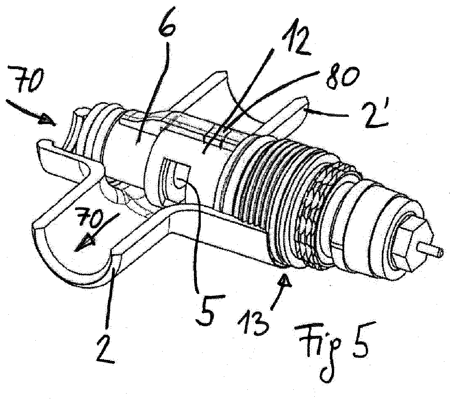

Fig. 5 zeigt den mit dem Aufsatz bzw. Wulst 13 versehenen Ventilkörper 6 in der Winkellage, in der das Ausströmfenster bzw. der Fluidauslass 5 dem vorderen Fluidanschluss 2 zugewendet ist. In dieser Stellung dichtet der Wulst 13 den Strömungsraum 8 oberhalb und unterhalb des Fluidauslasses 5 gegenüber dem hinten liegenden Fluidanschluss 2' mehr oder weniger gut bzw. mit vorgegebener Leckage ab. Die Dichtwirkung hängt von baulich vorgegebenen Toleranzen ab. Aufgrund dieser vorhandenen und/oder durch eine durch den Strömungskanal 80 vorgegebenen Leckage kann vorgesehen sein, dass Heizfluid vom Fluidauslass 5 nur zu einem überwiegenden Teil in den vorne gelegenen Fluidanschluss 2 strömt und ein geringer Anteil definiert zum hinteren Fluidanschluss 2' strömt.

Praktisch erstreckt sich eine auf dem Ventilkörper 6 aufgesetzte, den Aufsatz 13 bzw. den Wulst ausbildende Hülse 14 über einen Winkelbereich von mehr als 180° um eine formschlüssige Verbindung mit dem Ventilkörper 6 und ausreichende Dichtwirkung zu erreichen.

Fig. 6 zeigt eine Explosionszeichnung, aus der die einzelnen Bauteile der Vorrichtung zu entnehmen sind. Die Druckmutter 11 dient zum Fixieren des Ventilkörpers 6 in der gewählten Winkellage.

Der Aufsatz bzw. Wulst 13 kann in Form einer Steck- bzw. Aufsatzhülse 14 ausgebildet sein, die links in Fig. 6 nochmals freigestellt dargestellt ist. In dieser Hülse 14 verläuft der Strömungsdurchgang 80.

Fig. 7 zeigt ein Heizelement 20, das an eine erfindungsgemäße Vorrichtung angeschlossen ist. Mit einer Fluidleitung 100 wird beim Fluideinlass 30 die Vorrichtung mit Heizfluid angespeist. Über eine Fluideintrittsöffnung 45 wird das den hinteren Fluidanschluss 2' der Vorrichtung verlassende Heizfluid dem Heizelement 20 zugeführt. Die Ableitung des Heizfluids aus dem Heizelement 20 kann - je nach Art der gewählten Durchströmung - bei einem Heizfluidauslass 90 erfolgen.

Der Aufsatz bzw. Wulst 13 ist derart am Ventilkörper 6 befestigt, dass er seine Lage relativ zum Fluidauslass 5 bei einem Verdrehen bzw. Versetzen des Ventilkörpers 6 nicht ändern kann.

Die Umstellung der Vorrichtung bzw. eines Heizkörpers von einem symmetrischen zu einem asymmetrischen Durchfluss kann somit allein durch Verstellung bzw. winkelverdrehtes Einsetzen des Ventilkörpers 6 vorgenommen werden.

## Patentansprüche

1. Vorrichtung zum wahlweisen symmetrischen oder asymmetrischen Zuleiten von Heizfluid zu zumindest zwei an die Vorrichtung fluidleitend angeschlossenen Heizelementen (20), gegebenenfalls Heizplatten, wobei die Vorrichtung ein Ventilgehäuse (1) mit zwei, von diesem Ventilgehäuse (1) in unterschiedliche, gegebenenfalls entgegengesetzte, Richtungen, abgehenden Fluidanschlüssen (2, 2') und ein in eine Ventilaufnahme (3) des Ventilgehäuses (1) einsetzbares Ventil (40) mit einem einen Fluideinlass (4) und einen Fluidauslass (5) aufweisenden Ventilkörper (6) umfasst, wobei
- der Ventilkörper (6) mit dem Fluidauslass (5) durch Verdrehung um seine Längsachse (L) wahlweise in zumindest zwei unterschiedlichen Winkellagen um die Längsachse (A) der Ventilaufnahme (3) herum in das Ventilgehäuse (1) einsetzbar ist, und
- abhängig von der jeweils gewählten Winkellage das Heizfluid vom Fluidauslass (5) zu dem dieser Winkellage zugeordneten Fluidanschluss (2, 2') des Ventilgehäuses (1) hin oder gleichzeitig zu beiden Fluidanschlüssen (2, 2') hin ausströmbar ist,
**dadurch gekennzeichnet, dass** die Vorrichtung eine Druckmutter (11) umfasst und dass der Ventilkörper (6) mit der in das Ventilgehäuse (1) auf- oder einschraubbaren Druckmutter (11) in den unterschiedlichen Winkellagen am Ventilgehäuse (1) festgelegt oder festlegbar ist.

2. Vorrichtung nach Anspruch 1, **dadurch gekennzeichnet, dass** die beiden Winkellagen zueinander bezüglich der Längsachse (A) der Ventilaufnahme (3), vorzugsweise um 90°, versetzt sind bzw. in jeweils, vorzugsweise um 90°, zueinander versetzten Umfangsbereichen der Ventilaufnahme (3) liegen, wobei der Fluidauslass (5) in der einen Winkellage dem einen der Fluidanschlüsse (2, 2') des Ventilgehäuses (1) zugewandt ist und bevorzugt bzw. in überwiegendem Ausmaß oder ausschließlich Heizfluid nur ausschließlich zu diesem oder in diesen ausströmt und in der anderen Winkellage Heizfluid zu beiden Fluidanschlüssen (2, 2') abgibt.

3. Vorrichtung nach Anspruch 1 oder 2, **dadurch gekennzeichnet, dass** zwischen dem Ventilkörper (6) und der Gehäuseinnenwand (7) ein zu den beiden Fluidanschlüssen (2, 2') des Ventilgehäuses (1) führender Strömungsdurchgang (8) ausgespart ist und der Fluidauslass (5) in der einen Winkellage zu einem der beiden Fluidanschlüsse (2, 2') und in der anderen Winkellage in diesen Strömungsdurchgang (8), vorzugsweise mittig, ausströmt.

4. Vorrichtung nach einem der Ansprüche 1 bis 3, **dadurch gekennzeichnet, dass** die Fluidanschlüsse (2, 2') des Ventilgehäuses (1) senkrecht zur Oberfläche des Ventilkörpers (6) stehen.

5. Vorrichtung nach einem der Ansprüche 1 bis 4, **dadurch gekennzeichnet, dass** am Ventilkörper (6) - in axialer Richtung gesehen - beidseitig des Fluidauslasses (5) umlaufende Dichtflächen (9) ausgebildet oder umlaufende Dichtungen angeordnet sind, die mit an der Gehäuseinnenwand (10) ausgebildeten, umlaufenden Dichtflächen oder an der Gehäuseinnenwand angeordneten, umlaufenden Dichtungen zusammenwirken.

6. Vorrichtung nach einem der Ansprüche 1 bis 5, **dadurch gekennzeichnet,**
- **dass** am Ventilkörper (6) in einem vom Fluidauslass (5) beabstandeten, vorzugsweise diesem diametral gegenüberliegenden, Umfangsbereich (12) ein Wulst (13) oder Aufsatz am Ventilkörper (6) ausgebildet oder auf den Ventilkörper (6) in diesem Umfangsbereich (12) ein einen Wulst (13) oder Aufsatz ausbildender Körper (14) aufgesetzt ist, der den Zwischenraum zwischen der Gehäuseinnenwand (60) und der Oberfläche des Ventilkörpers (6) in diesem Bereich einengt oder bis auf eine vorgegebene Leckage abdichtet, oder
- **dass** die Gehäuseinnenwand (60) im Bereich zwischen den Fluidanschlüssen (2, 2') und die Umfangsfläche des Ventilkörpers (6) aneinander angepasst sind und eine Heizfluidströmung zwischen sich verhindern oder zwischen sich einen Strömungsdurchgang (80) mit vorgegebenem Querschnitt ausbilden, oder
- **dass** die Oberflächenform des Wulstes (13) oder des Aufsatzes an die, gegebenenfalls rotationssymmetrisch ausgebildete, Innenwandfläche des Ventilgehäuses (1) im Bereich um die Fluidanschlüsse (2, 2') angepasst ist und ein Einströmen von Heizfluid bei entsprechend gewählter Winkellage in den jeweiligen Fluidanschluss (2, 2') verhindert oder in definierter Form ermöglicht, wozu in zumindest einem Randbereich des Wulstes (13) bzw. Aufsatzes ein Strömungsdurchgang (80) oder ein Kanal ausgebildet ist.

7. Vorrichtung nach Anspruch 6, **dadurch gekennzeichnet, dass** der Strömungsdurchgang (80) im Aufsatz bzw. Wulst (13) in einem Umfangsbereich des Ventilkörpers (6) oder des Aufsatzes oder Wulstes (13), der zum Fluidauslass (5) um 90° versetzt liegt, ausgebildet ist und eine Fluidströmung vom Fluidauslass (5) zu dem jeweils nicht direkt angeströmten Fluidanschluss (2, 2') ermöglicht.

8. Vorrichtung nach einem der Ansprüche 1 bis 7, **dadurch gekennzeichnet, dass** am Ventilgehäuse (1) Führungselemente (15) oder Lagefixierungselemente, z.B. Nuten und Vorsprünge, und an diese angepasste und mit diesen zusammenwirkende Führungselemente (16) oder Lagefixierungselemente, z.B. Nuten und Vorsprünge, am Ventilkörper (6) angeordnet oder ausgebildet sind, die den Ventilkörper (6) in den vorgegebenen Winkellagen festlegen und/oder dass am Ventilgehäuse (1) und/oder am Ventilkörper (6) optische Markierungen (41) angebracht sind, die Winkellagen für den Ventilkörper (6) zeigen oder vorgeben.

9. Vorrichtung nach Anspruch 7 oder 8, **dadurch gekennzeichnet, dass** der Ventilkörper (6), abgesehen von dem Bereich, in dem an ihm der Wulst (13) ausgebildet oder der Aufsatz angeordnet ist, kreisförmigen Querschnitt besitzt.

10. Vorrichtung nach einem der Ansprüche 1 bis 9, **dadurch gekennzeichnet,**
- **dass** die Fluidanschlüsse (2, 2') des Ventilgehäuses (1) bezüglich des Ventilkörpers (6) sowie dessen Längsachse (L) sowie der Längsachse (A) der Ventilaufnahme (3) einander diametral gegenüberliegen, und/oder
- **dass** der Fluidauslass (5) in einer seiner Winkellagen, gegebenenfalls zentral, vor der Fluideinströmöffnung eines Fluidanschlusses (2, 2') liegt.

11. Vorrichtung nach einem der Ansprüche 1 bis 10, **dadurch gekennzeichnet, dass** die Längsachse (L) des Ventilkörpers (6) in der Längsachse (A) der Ventilaufnahme (3) liegt.

12. Vorrichtung nach einem der Ansprüche 1 bis 11, **dadurch gekennzeichnet,**
- **dass** der Fluideinlass (4) des Ventilkörpers (6) auf der oder im Bereich der im Ventilgehäuse (1) liegenden Stirnfläche des Ventilkörpers (6) liegt, und/oder
- **dass** die Ausströmrichtung des Fluidauslasses (5) senkrecht zur Längsachse (L) des Ventilkörpers (6) gerichtet ist.

13. Vorrichtung nach einem der Ansprüche 1 bis 12, **dadurch gekennzeichnet, dass** der Fluidauslass (5) des Ventilkörpers (6) auf der Umfangsfläche des insbesondere zylindrische Oberfläche besitzenden Ventilkörpers (6) liegt bzw. austritt.

14. Vorrichtung nach einem der Ansprüche 7 bis 13, **dadurch gekennzeichnet, dass** der Aufsatz und/oder der Wulst (13) als ein auf einem auf den Ventilkörper (6) aufsteck- oder aufsetzbarer Bauteil ausgebildet sind, in dem gegebenenfalls der Strömungsdurchgang (80) ausgebildet ist.

15. Heizkörper umfassend zumindest zwei Heizelemente, gegebenenfalls Heizplatten, wobei zwei Heizelemente mit einer Vorrichtung gemäß einem der Ansprüche 1 bis 14 fluidleitend verbunden sind.

16. Heizkörper nach Anspruch 15 mit zumindest zwei mit Heizfluid gefüllten oder befüllbaren, gegebenenfalls plattenförmigen und/oder parallel zueinander angeordneten, Heizelementen, **dadurch gekennzeichnet, dass** an den Heizkörper eine Vorrichtung gemäß einem der Ansprüche 1 bis 14 fluidleitend angeschlossen ist, wobei die Fluideintrittsöffnungen (45) von zwei Heizelementen (20) jeweils mit einem Fluidanschluss (2, 2') der Vorrichtung verbunden sind.

## Claims

1. Device for supplying heating fluid either symmetrically or asymmetrically to at least two heating elements (20), possibly heating plates, connected in a fluid-conducting manner to the device, wherein the device comprises a valve housing (1) with two fluid connections (2, 2') coming from said valve housing (1) in different, if necessary opposite directions and a valve (40) which can be inserted into a valve recess (3) of the valve housing (1) with a valve body (6) having a fluid inlet (4) and a fluid outlet (5), wherein
- the valve body (6) with the fluid outlet (5) can be inserted by rotating about its longitudinal axis (L) into the valve housing (1) in at least two different angular positions about the longitudinal axis (A) of the valve recess (3), and
- depending on the selected angular position the heating fluid can flow from the fluid outlet (5) to the fluid connection (2, 2') of the valve housing (1) assigned to said angular position or simultaneously to both fluid connections (2, 2'),
**characterised in that** the device comprises a pressure nut (11) and **in that** the valve body (6) is fixed or can be fixed by the pressure nut (11) which can be screwed onto or into the valve housing (1) in the different angular positions on the valve housing (1).

2. Device according to claim 1, **characterised in that** the two angular positions are offset to one another relative to the longitudinal axis (A) of the valve recess (3), preferably by 90°, or are in peripheral areas of the valve recess (3) offset to one another preferably by 90° respectively, wherein the fluid outlet (5) in one angular position faces towards one of the fluid connections (2, 2') of the valve housing (1) and preferably or to a greater extent or exclusively heating fluid flows only to the latter or into the latter and in the other angular position delivers heating fluid to both fluid connections (2, 2').

3. Device according to claim 1 or 2, **characterised in that** between the valve body (6) and the inner housing wall (7) a flow throughput (8) leading to the two fluid connections (2, 2') of the valve housing (1) is recessed and the fluid outlet (5) in the one angular position flows out to one of the two fluid connections (2, 2') and in the other angular position flows into said flow throughput (8), preferably centrally.

4. Device according to any of claims 1 to 3, **characterised in that** the fluid connections (2, 2') of the valve housing (1) are perpendicular to the surface of the valve body (6).

5. Device according to any of claims 1 to 4, **characterised in that** on the valve body (6) - as viewed in axial direction - peripheral sealing surfaces (9) on both sides of the fluid outlet (5) are formed or peripheral seals are arranged, which interact with peripheral sealing surfaces formed on the inner housing wall (10) or peripheral seals arranged on the inner housing wall.

6. Device according to any of claims 1 to 5, **characterised in that**
- on the valve body (6) in a peripheral area (12) spaced apart from the fluid outlet (5), preferably diametrically opposite the latter, a beading (13) or attachment is formed on the valve body (6) or a body (14) forming a beading (13) or attachment is fitted onto the valve body (6) in said peripheral area (12), which narrows the intermediate space between the inner housing wall (60) and the surface of the valve body (6) in this area or seals it to a predefined degree of leakage, or
- the inner housing wall (60) in the area between the fluid connections (2, 2') and the peripheral surface of the valve body (6) are adjusted to one another and prevent a flow of heating fluid between the latter or form between them a flow throughput (80) with predefined cross-section, or
- the surface form of the beading (13) or the attachment is adjusted to the possibly rotationally symmetrical inner wall surface of the valve housing (1) in the area around the fluid connections (2, 2') and prevents the inflow of heating fluid with a suitably selected angular position into the respective fluid connection (2, 2') or allows it in a defined form, whereby a flow throughput (80) or a channel is formed in at least one edge area of the beading (13) or attachment.

7. Device according to claim 6, **characterised in that** the flow throughput (80) in the attachment or beading (13) is formed in a peripheral area of the valve body (6) or the attachment or beading (13), which is offset by 90° to the fluid outlet (5) and enables a flow of fluid from the fluid outlet (5) to the not directly flowed through fluid connection (2, 2') respectively.

8. Device according to any of claims 1 to 7, **characterised in that** on the valve housing (1) guiding elements (15) or position fixing elements, e.g. grooves and projections, and guiding elements (16) or position fixing elements adapted to the latter and cooperating with the latter, e.g. grooves and projections, are arranged or formed on the valve body (6), which fix the valve body (6) in the predefined angular positions and/or **in that** on the valve housing (1) and/or on the valve body (6) optical markings (41) are attached which show or predefine angular positions for the valve body (6).

9. Device according to claim 7 or 8, **characterised in that** the valve body (6), apart from the area in which the beading (13) is formed or the attachment is arranged, has a circular cross-section.

10. Device according to any of claims 1 to 9, **characterised in that**
- the fluid connections (2, 2') of the valve housing (1) relative to the valve body (6) and its longitudinal axis (L) and the longitudinal axis (A) of the valve recess (3) are diametrically opposite to one another, and/or
- the fluid outlet (5) lies in one of its angular positions, if necessary centrally, in front of the fluid inlet opening of a fluid connection (2, 2').

11. Device according to any of claims 1 to 10, **characterised in that** the longitudinal axis (L) of the valve body (6) lies in the longitudinal axis (A) of the valve recess (3).

12. Device according to any of claims 1 to 11, **characterised in that**
- the fluid inlet (4) of the valve body (6) lies on or is in the area of the end face of the valve body (6) lying in the valve housing (1), and/or
- the outflow direction of the fluid outlet (5) is directed perpendicular to the longitudinal axis (L) of the valve body (6).

13. Device according to any of claims 1 to 12, **characterised in that** the fluid outlet (5) of the valve body (6) lies or exits on the circumferential surface of the valve body (6) which has in particular a cylindrical surface.

14. Device according to any of claims 7 to 13, **characterised in that** the attachment and/or the beading (13) are designed as a component which attached or is attachable to a valve body (6), in which the flow throughput (80) is formed if necessary.

15. Heating body comprising at least two heating elements, possibly hot plates, wherein two heating elements are connected in a fluid-conducting manner to a device according to any of claims 1 to 14.

16. Heating body according to claim 15 with at least two heating elements, which are possibly plate-like and are filled or can be filled with heating fluid and/or are arranged parallel to one another, **characterised in that** a device according to any of claims 1 to 14 is connected to the heating body in a fluid-conducting manner, wherein the fluid inlet openings (45) of two heating elements (20) respectively are connected to a fluid connection (2, 2') of the device.

## Revendications

1. Dispositif d'amenée, au choix symétrique ou asymétrique, de fluide chauffant à au moins deux éléments chauffants (20) raccordés au dispositif de manière à conduire le fluide, le cas échéant à des plaques chauffantes, dans lequel le dispositif comprend une boîte de soupape (1) avec deux raccords de fluide (2, 2') partant de cette boîte de soupape (1) dans des directions différentes, le cas échéant opposées, et une soupape (40) pouvant être placée dans un logement de soupape (3) de la boîte de soupape (1) et munie d'un corps de soupape (6) comportant une entrée de fluide (4) et une sortie de fluide (5), dans lequel
- le corps de soupape (6) peut être placé dans la boîte de soupape (1) avec la sortie de fluide (5) au choix, par rotation autour de son axe longitudinal (L), dans au moins deux positions angulaires différentes autour de l'axe longitudinal (A) du logement de soupape (3) et
- en fonction de la position angulaire respectivement choisie, le fluide chauffant peut s'écouler de la sortie de fluide (5) au raccord de fluide (2, 2'), associé à cette position angulaire, de la boîte de soupape (1) ou simultanément aux deux raccords de fluide (2, 2'),
**caractérisé en ce que** le dispositif comprend un écrou de pression (11) et **en ce que** le corps de soupape (6) est ou peut être immobilisé au niveau de la boîte de soupape (1) dans les différentes positions angulaires avec l'écrou de pression (11) pouvant être vissé ou dévissé dans la boîte de soupape (1).

2. Dispositif selon la revendication 1, **caractérisé en ce que** les deux positions angulaires sont décalées l'une par rapport à l'autre et par rapport à l'axe longitudinal (A) du logement de soupape (3), de préférence de 90°, ou se trouvent dans des zones circonférentielles du logement de soupape (3) qui sont décalées respectivement, de préférence de 90 °, l'une par rapport à l'autre, dans lequel la sortie de fluide (5) dans l'une position angulaire est proche de l'un des raccords de fluide (2, 2') de la boîte de soupape (1) et du fluide chauffant ne s'écoule de préférence respectivement principalement ou exclusivement que vers ou dans ledit raccord et la sortie de fluide dans l'autre position angulaire délivre du fluide chauffant aux deux raccords de fluide (2, 2').

3. Dispositif selon la revendication 1 ou 2, **caractérisé en ce qu'**un passage d'écoulement (8) menant aux deux raccords de fluide (2, 2') de la boîte de soupape (1) est ménagé entre le corps de soupape (6) et la paroi intérieure de boîte (7) et la sortie de fluide (5) dans une position angulaire s'écoule vers un des deux raccords de fluide (2, 2') et dans l'autre position angulaire dans ce passage d'écoulement (8), de préférence au milieu.

4. Dispositif selon l'une quelconque des revendications 1 à 3, **caractérisé en ce que** les raccords de fluide (2, 2') de la boîte de soupape (1) se dressent perpendiculairement à la surface du corps de soupape (6).

5. Dispositif selon l'une quelconque des revendications 1 à 4, **caractérisé en ce que**, au niveau du corps de soupape (6), des deux côtés de la sortie de fluide (5) - vu en direction axiale - des surfaces d'étanchéité périphériques (9) sont réalisées ou des joints d'étanchéité périphériques sont agencés, lesquels coopèrent avec des surfaces d'étanchéité périphériques réalisées au niveau de la paroi intérieure de boîte (10) ou avec des joints d'étanchéité périphériques agencés au niveau de la paroi intérieure de boîte.

6. Dispositif selon l'une quelconque des revendications 1 à 5, **caractérisé en ce que**
- au niveau du corps de soupape (6), dans une zone périphérique (12) distante de la sortie de fluide (5) et de préférence diamétralement opposée à celle-ci, un bourrelet (13) ou une garniture est réalisé au niveau du corps de soupape (6) ou un corps (14) réalisant un bourrelet (13) ou une garniture est posé sur le corps de soupape (6) dans cette zone périphérique (12), lequel resserre dans cette zone l'espace entre la paroi intérieure de boîte (60) et la surface du corps de soupape (6) ou étanchéifie ledit espace à l'exception d'une fuite prédéterminée, ou
- la paroi intérieure de boîte (60) dans la zone entre les raccords de fluide (2, 2') et la surface périphérique du corps de soupape (6) sont adaptées l'une à l'autre et empêchent un écoulement de fluide chauffant entre elles ou réalisent entre elles un passage d'écoulement (80) avec une section transversale prédéterminée, ou
- la forme de surface du bourrelet (13) ou de la garniture est adaptée à la surface de paroi intérieure, réalisée le cas échéant symétrique en rotation, de la boîte de soupape (1) dans la zone autour des raccords de fluide (2, 2') et elle empêche un afflux de fluide chauffant, dans une position angulaire choisie de manière correspondante, dans le raccord de fluide (2, 2') respectif ou le permet dans une forme définie, ce pour quoi un passage d'écoulement (80) ou un canal est réalisé dans au moins une zone marginale du bourrelet (13) ou de la garniture.

7. Dispositif selon la revendication 6, **caractérisé en ce que** le passage d'écoulement (80) dans la garniture ou dans le bourrelet (13) est réalisé dans une zone périphérique du corps de soupape (6) ou de la garniture ou du bourrelet (13), zone qui est décalée de 90° par rapport à la sortie de fluide (5), et permet un écoulement de fluide de la sortie de fluide (5) au raccord de fluide (2, 2') respectivement non directement alimenté.

8. Dispositif selon l'une quelconque des revendications 1 à 7, **caractérisé en ce que**, au niveau de la boîte de soupape (1), des éléments de guidage (15) ou des éléments de fixation de position, par exemple des rainures et des parties en saillie, et des éléments de guidage (16) ou des éléments de fixation de position, par exemple des rainures et des parties en saillie, qui sont adaptés aux précédents et qui coopèrent avec eux, sont agencés ou réalisés au niveau du corps de soupape (6) et immobilisent le corps de soupape (6) dans les positions angulaires prédéterminées et/ou **en ce que**, au niveau de la boîte de soupape (1) et/ou au niveau du corps de soupape (6), des repères visuels (41) sont placés, lesquels indiquent ou prescrivent des positions angulaires pour le corps de soupape (6).

9. Dispositif selon la revendication 7 ou 8, **caractérisé en ce que** le corps de soupape (6), mis à part la zone dans laquelle le bourrelet (13) est réalisé ou la garniture est agencée à son niveau, a une section transversale circulaire.

10. Dispositif selon l'une quelconque des revendications 1 à 9, **caractérisé en ce que**
- les raccords de fluide (2, 2') de la boîte de soupape (1) sont diamétralement opposés l'un à l'autre par rapport au corps de soupape (6) ainsi qu'à son axe longitudinal (L) ainsi qu'à l'axe longitudinal (A) du logement de soupape (3), et/ou
- la sortie de fluide (5) se trouve, dans l'une de ses positions angulaires, le cas échéant de manière centrale, devant l'ouverture d'entrée de fluide d'un raccord de fluide (2, 2').

11. Dispositif selon l'une quelconque des revendications 1 à 10, **caractérisé en ce que** l'axe longitudinal (L) du corps de soupape (6) se trouve dans l'axe longitudinal (A) du logement de soupape (3).

12. Dispositif selon l'une quelconque des revendications 1 à 11, **caractérisé en ce que**
- l'entrée de fluide (4) du corps de soupape (6) se trouve sur ou dans la zone de la surface frontale, située dans la boîte de soupape (1), du corps de soupape (6), et/ou
- la direction d'écoulement hors de la sortie de fluide (5) est orientée perpendiculairement à l'axe longitudinal (L) du corps de soupape (6).

13. Dispositif selon l'une quelconque des revendications 1 à 12, **caractérisé en ce que** la sortie de fluide (5) du corps de soupape (6) se trouve ou sort sur la surface périphérique du corps de soupape (6) ayant une surface en particulier cylindrique.

14. Dispositif selon l'une quelconque des revendications 7 à 13, **caractérisé en ce que** la garniture et/ou le bourrelet (13) sont réalisés comme un élément pouvant être enfoncé ou posé sur le corps de soupape (6), le passage d'écoulement (80) étant réalisé le cas échéant dans ledit élément.

15. Corps chauffant comprenant au moins deux éléments chauffants, le cas échéant des plaques chauffantes, dans lequel deux éléments chauffants sont reliés à un dispositif selon l'une quelconque des revendications 1 à 14 de manière à conduire un fluide.

16. Corps chauffant selon la revendication 15 avec au moins deux éléments chauffants remplis ou pouvant être remplis avec du fluide chauffant, le cas échéant en forme de plaques et/ou agencés parallèlement l'un à l'autre, **caractérisé en ce qu'**un dispositif selon l'une quelconque des revendications 1 à 14 est raccordé au corps chauffant de manière à conduire un fluide, dans lequel les ouvertures d'entrée de fluide (45) de deux éléments chauffants (20) sont reliées respectivement à un raccord de fluide (2, 2') du dispositif.
